# FASCICULE DE BREVET EUROPEEN

(11) **EP 2 376 827 B1**
(45) Date de publication et mention de la délivrance du brevet: **30.07.2014**
(21) Numéro de dépôt: 10706283.8
(22) Date de dépôt: 06.01.2010
(51) Int. Cl.: G21C 13/06, F22B 37/22, F16L 55/115

(54) **ENSEMBLE D'OBTURATION ÉTANCHE D'UNE OUVERTURE D'UNE TUBULURE DE JONCTION D'UNE ENCEINTE ET D'UNE CANALISATION ET PROCÉDÉ POUR LA MISE EN OEUVRE D'UN TEL ENSEMBLE**
ABGEDICHTETE STOPFENANORDNUNG FÜR EINE ÖFFNUNG IN EINEM VERBINDUNGSROHR ZWISCHEN EINEM GEHÄUSE UND EINER ROHRLEITUNG SOWIE VERFAHREN ZUM EINSETZEN DIESER ANORDNUNG.
SEALING PLUG ASSEMBLY FOR AN OPENING IN A JUNCTION TUBING BETWEEN A HOUSING AND A PIPE, AND METHOD FOR IMPLEMENTING SAID ASSEMBLY

(30) Priorité: 14.01.2009 FR 0950177
(43) Date de publication de la demande: 19.10.2011
(73) Titulaire: AREVA NP, 92400 Courbevoie (FR)
(72) Inventeur: LE GALL, Lionel, F-69100 Villeurbanne (FR); CHEVALIER, Pierre, F-69003 Lyon (FR); PETIT, Jean-Claude, F-59420 Mouvaux (FR)
(74) Mandataire: Jacobson, Claude
(86) Numéro de dépôt international: PCT/FR2010/050010
(87) Numéro de publication internationale: WO 2010/081976

(56) Documents cités:
- EP-A- 0 170 789
- FR-A- 2 700 060
- FR-A- 2 708 080

## Description

La présente invention concerne un ensemble d'obturation étanche d'une ouverture d'une tubulure de jonction d'une enceinte et d'une canalisation et plus particulièrement d'une ouverture d'une tubulure de raccordement d'une boîte à eau d'un générateur de vapeur d'un réacteur nucléaire à eau sous pression à une canalisation du circuit primaire.

L'invention concerne également un procédé d'obturation d'une ouverture d'une tubulure de jonction d'une enceinte et d'une canalisation au moyen d'un tel obturateur.

Les réacteurs nucléaires à eau sous pression comportent des générateurs de vapeur qui assurent l'échauffement et la vaporisation d'eau d'alimentation par la chaleur transportée par l'eau sous pression utilisée pour le refroidissement du coeur du réacteur.

Les réacteurs à eau sous pression comportent, sur chacune de leurs branches primaires, un générateur de vapeur ayant une partie primaire dans laquelle circule l'eau sous pression de refroidissement du réacteur et une partie secondaire recevant de l'eau d'alimentation qui est échauffée et vaporisée progressivement et ressort de la partie secondaire du générateur de vapeur sous forme de vapeur qui est envoyée à une turbine associée au réacteur nucléaire pour assurer l'entraînement d'un alternateur de production du courant électrique.

De tels générateurs de vapeur comportent une enveloppe externe, appelée enveloppe de pression, de forme générale cylindrique disposée avec son axe vertical et solidaire d'une plaque tubulaire sensiblement horizontale dont la face inférieure ou face d'entrée constitue une paroi d'une boîte à eau d'alimentation du générateur de vapeur, en eau sous pression constituant le fluide primaire.

Cette boîte à eau de forme généralement hémisphérique est traversée par des ouvertures au niveau desquelles sont soudées des tubulures de raccordement à la branche chaude et à la branche froide d'une boucle du circuit primaire du réacteur nucléaire.

Les réacteurs nucléaires doivent périodiquement être arrêtés pour réaliser des opérations de maintenance, de remplacement et de réparation, telles que la manutention des assemblages combustibles.

Ce temps d'arrêt permet d'effectuer également la maintenance des générateurs de vapeur.

Pour effectuer certaines opérations d'entretien ou de réparation sur les générateurs de vapeur, pendant les arrêts du réacteur nucléaire, il peut être nécessaire de faire intervenir du personnel d'exécution à l'intérieur de la boîte à eau.

Le circuit primaire et la cuve du réacteur nucléaire sont remplis d'eau pendant les opérations de maintenance du réacteur nucléaire, de sorte qu'il est nécessaire de vidanger la boîte à eau puis de l'isoler du circuit primaire avant de pouvoir faire intervenir des opérateurs à l'intérieur de cette boîte à eau.

Pour permettre aux opérateurs d'intervenir à l'intérieur de la boîte à eau, on connaît des dispositifs de fermeture étanche des tubulures de jonction de cette boîte à eau au circuit primaire qui comportent des obturateurs également appelés tape d'obturation, mis en place à l'intérieur des tubulures de la boîte à eau préalablement aux interventions.

Pour la mise en place de cet obturateur, un anneau de fixation de l'obturateur est soudé à l'intérieur de la boîte à eau autour de l'ouverture de la tubulure dans sa partie débouchant à l'intérieur de l'enceinte dans une disposition coaxiale par rapport à la tubulure.

L'obturateur comporte aussi un organe d'étanchéité destiné à être appliqué sur la surface intérieure de l'anneau de fixation et/ou de l'ouverture de la tubulure.

Il est généralement nécessaire de réaliser l'obturateur en plusieurs parties qui sont assemblées à l'intérieur de la boîte à eau ou sous forme pliante, dans la mesure où l'obturateur doit être introduit dans la boîte à eau par un trou d'homme dont le diamètre est généralement inférieur au diamètre de l'ouverture de la tubulure dans laquelle on place l'obturateur.

Ce type d'obturateur doit satisfaire à des exigences de conception liées aux conditions d'utilisation, notamment en terme de pression, de température et de dosimétrie pour les opérateurs.

En effet, l'obturateur doit pouvoir résister à une pression de l'ordre de 5 bars du côté du circuit primaire et à une température pouvant atteindre 120°C en cas de perte de refroidissement du réacteur.

Afin de réduire au maximum la dosimétrie intégrée par les opérateurs, lors des intervenions, l'obturateur doit pouvoir être installé et retiré au cours d'une courte intervention humaine et de préférence être vissé par télé-opération sur l'anneau de fixation.

A cet effet, on connaît un obturateur également appelé tape d'obturation, composé de trois parties adjacentes qui, une fois assemblée forment une cuvette comportant une première partie cylindrique fermée par un fond dont le diamètre est inférieur au diamètre intérieur de l'anneau et une seconde partie périphérique de forme annulaire plate dont le diamètre extérieur est supérieur au diamètre intérieur de l'anneau.

Dans ce cas, l'étanchéité est assurée par deux joints annulaires périphériques gonflables qui sont intercalés entre la surface intérieure de l'anneau et la surface externe de la partie cylindrique de l'obturateur, lorsque cet obturateur est mis en place, ainsi que par un joint statique venant en appui, soit contre la surface intérieure de l'ouverture de la tubulure, soit contre la surface supérieure de l'anneau et une partie périphérique de retenue sous la forme d'un rebord venant s'appliquer contre la surface supérieure de l'anneau de fixation.

Le maintien en position de l'obturateur est généralement assuré par des organes de fixation, comme par exemple des vis, qui traversent la partie périphérique de l'obturateur et qui sont vissées dans des orifices taraudés ménagés dans l'anneau.

L'inconvénient principal de ce genre d'obturateur réside dans le fait qu'il nécessite le raccordement des joints à une unité de gonflage et qu'il nécessite une surveillance continue du gonflage des joints garantissant l'étanchéité.

De plus, il s'est avéré que ce type d'obturateur présente une résistance mécanique et en particulier une résistance à la température ou à la pression d'un fluide s'exerçant d'un côté dudit obturateur qui peut être insuffisante pour des utilisations répétées et de longues durées, ou pour des situations accidentelles.

On connaît également dans le FR-A-2 708 080, un ensemble comprenant un obturateur et un anneau de fixation, l'obturateur étant apte à étancher une ouverture d'une tubulure de jonction d'une enceinte et d'une canalisation, la tubulure comportant ledit anneau disposé autour de cette ouverture de raccordement de la tubulure débouchant dans l'enceinte et fixé sur la surface interne de ladite enceinte au niveau de sa face inférieure, ledit obturateur comprenant :
- un opercule rigide formé par une partie centrale sensiblement cylindrique dont le diamètre est inférieur au diamètre intérieur de l'anneau de fixation et une partie annulaire plate dont le diamètre est supérieur au diamètre intérieur dudit anneau de fixation et munie d'organes de fixation destinés à être vissés dans des orifices taraudés ménagés sur cet anneau, et
- un ensemble d'étanchéité porté par ledit opercule, comprenant
- un second joint annulaire statique apte à venir en appui sur une zone de la surface supérieure de l'anneau de fixation située entre le rebord interne et les orifices taraudés dudit anneau, lors du serrage des organes de vissage de l'opercule, et
- un joint annulaire plat apte à venir en appui sur une zone de la surface supérieure de l'anneau de fixation située entre les orifices taraudés et le rebord externe dudit anneau, lors du serrage des organes de vissage de l'opercule.

L'invention a pour but d'éviter ces inconvénients en proposant un ensemble d'obturation étanche d'une ouverture d'une tubulure de jonction d'une enceinte et d'une canalisation, fiable et facile à mettre en oeuvre par des opérateurs à l'intérieur d'une boîte eau d'un générateur de vapeur, tout en diminuant le temps d'intervention de ces opérateurs dans un environnement hostile.

L'invention a donc pour objet un ensemble d'obturation étanche d'une ouverture d'une tubulure de jonction d'une enceinte et d'une canalisation, comportant d'une part, un anneau de fixation disposé autour de cette ouverture de raccordement de la tubulure débouchant dans l'enceinte et fixé sur la surface interne de ladite enceinte et d'autre part, un obturateur, ledit obturateur comprenant:
- un opercule rigide formé par une partie centrale sensiblement cylindrique dont le diamètre est inférieur au diamètre intérieur de l'anneau de fixation et une partie annulaire plate dont le diamètre est supérieur au diamètre intérieur dudit anneau de fixation et munie d'organes de fixation destinés à être vissés dans des orifices taraudés ménagés sur cet anneau, et
- un ensemble d'étanchéité porté par ledit opercule,
caractérisé en ce que l'ensemble d'étanchéité comprend :
- un joint annulaire passif comportant au moins une chambre annulaire et muni d'au moins une lèvre extérieure, ledit joint étant déformable entre une position rétractée par mise en dépression de ladite au moins une chambre durant la pose de l'opercule sur l'anneau de fixation et une position déployée d'étanchéité dans laquelle ladite au moins lèvre est appliquée contre la surface interne de l'anneau de fixation,
- un premier joint annulaire statique apte à assurer l'étanchéité contre la surface interne et/ou l'angle interne supérieur de l'anneau de fixation,
- un second joint annulaire statique apte à venir en appui sur une zone de la surface supérieure de l'anneau de fixation située entre le rebord interne et les orifices taraudés dudit anneau, lors du serrage des organes de vissage de l'opercule,
- un joint annulaire plat apte à venir en appui sur une zone de la surface supérieure de l'anneau de fixation située entre les orifices taraudés et le rebord externe dudit anneau, lors du serrage des organes de vissage de l'opercule.

Selon d'autres caractéristiques de l'invention :
- l'ensemble d'étanchéité est solidaire d'une membrane fixée sur la face inférieure de la partie centrale de l'opercule,
- ladite au moins chambre annulaire du joint passif est reliée par au moins une valve de raccordement à un système de mise en dépression,
- le second joint annulaire statique est du type à simple effet ou à double effet,
- l'opercule est en matériau composite ou en un alliage métallique, comme par exemple de l'aluminium,
- l'opercule est formé d'au moins deux panneaux articulés entre eux et repliables les uns sur les autres,
- l'opercule est formé d'au moins deux panneaux indépendants.

L'invention a également pour objet un procédé d'obturation étanche d'une ouverture d'une tubulure de jonction d'une enceinte et d'une canalisation au moyen d'un obturateur tel que précédemment défini, caractérisé en ce qu'il consiste en les étapes suivantes :
- on introduit à l'intérieur de l'enceinte par un trou d'homme, l'opercule portant l'ensemble d'étanchéité,
- on relie la valve de raccordement de ladite au moins chambre annulaire du joint passif au système de mise en dépression,
- on rétracte le joint passif par mise en dépression de ladite au moins chambre annulaire et on le maintient en position rétractée,
- on positionne et on installe l'obturateur sur l'anneau de fixation en plaçant, d'une part, le premier joint annulaire statique contre la surface interne de l'anneau de fixation et, d'autre part, le second joint annulaire statique et le joint annulaire plat sur la surface supérieure dudit anneau,
- on fixe l'obturateur sur l'anneau de fixation par les organes de vissage, et
- on arrête la mise en dépression de ladite au moins chambre annulaire du joint passif pour déployer ledit joint contre la surface interne de l'anneau de fixation et rende étanche l'obturation de l'ouverture de la tubulure.

Selon d'autres caractéristiques du procédé selon l'invention :
- on introduit dans l'enceinte, l'opercule en position repliée et on déploie ledit opercule,
- on introduit dans l'enceinte, les panneaux indépendants de l'opercule et on déploie ledit opercule.

L'invention et ses avantages seront mieux compris à la lecture de la description qui va suivre, donnée à titre d'exemple et faite en se référant aux dessins annexés, sur lesquels :
- la Fig. 1 est une vue en perspective éclatée de la partie inférieure d'un générateur de vapeur avec sa boîte à eau,
- la Fig. 2 est une vue en coupe d'une tubulure de la boîte à eau d'un générateur de vapeur comportant un anneau de fixation d'un obturateur, conforme à l'invention,
- la Fig. 3 est une vue schématique en coupe dans un plan vertical médian d'un obturateur, conforme à l'invention,
- la Fig. 4 est une vue schématique de dessus de l'obturateur, conforme à l'invention,
- la Fig. 5 est une vue schématique en coupe dans un plan vertical de l'obturateur pendant sa mise en place sur l'anneau de fixation, et
- la Fig. 6 est une vue schématique en coupe dans un plan vertical de l'obturateur monté sur l'anneau de fixation et fixé autour de l'ouverture de raccordement de la tubulure de l'enceinte.

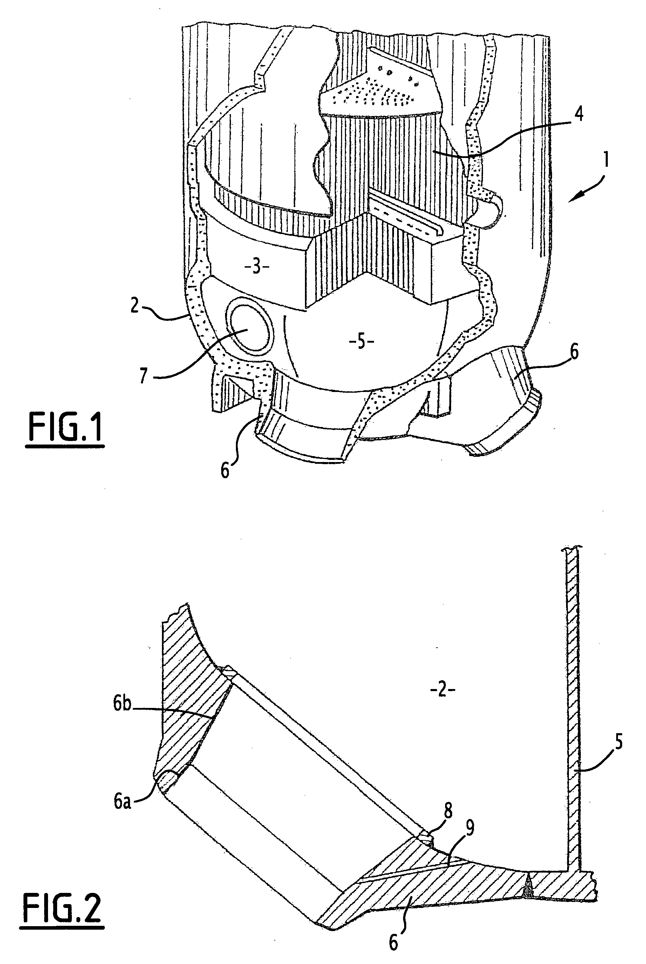

Sur la Fig. 1, on a représenté la partie inférieure d'un générateur de vapeur désignée par la référence générale 1 et comportant la paroi hémisphérique d'une boîte à eau 2. Cette paroi hémisphérique est soudée sur une plaque tubulaire 3 dans laquelle sont fixées les extrémités des tubes du faisceau 4. La boîte à eau 2 est divisée intérieurement en deux parties par une cloison transversale 5.

De part et d'autre de la cloison 5, la paroi de la boîte à eau 2 est traversée par des ouvertures au niveau desquelles sont fixées des tubulures 6 de raccordement de deux canalisations, non représentées, du circuit primaire.

Les tubulures 6 permettent d'assurer l'alimentation en eau sous pression de l'une des parties de la boîte à eau et la récupération par l'autre partie de la boîte à eau de l'eau sous pression ayant circulée à l'intérieur des tubes du faisceau 4 du générateur de vapeur 1.

La paroi de la boîte à eau 2 est également traversée par des trous d'homme 7 débouchant dans chacun des compartiments séparés par la cloison 5. Comme il est visible sur la Fig. 2, les tubulures 6 fixées au niveau des ouvertures de la traversée de la boîte à eau 2 comportent un alésage de forme cylindro-tronconique comportant une première partie 6a cylindrique prolongée par une seconde partie 6b tronconique qui s'évase en direction de l'intérieur de la boîte à eau 2.

Pour réaliser une intervention à l'intérieur de la boîte à eau 2, il peut être nécessaire de faire pénétrer des opérateurs par les trous d'homme 7 à l'intérieur de l'un ou de l'autre des compartiments de la boîte à eau 2 séparés par la cloison 5, alors que le circuit primaire doit être maintenu plein d'eau. Pour permettre de telles interventions dans de telles conditions, le circuit primaire doit préalablement être temporairement vidangé pour installer des obturateurs des tubulures primaires du générateur de vapeur et dont la fonction est de créer une barrière étanche entre le circuit primaire et l'intérieur de la boîte à eau du générateur de vapeur. Le circuit primaire peut alors être à nouveau rempli d'eau dès la fin de l'installation des obturateurs de tubulures primaires dans la boîte à eau du générateur de vapeur.

Dans ce but, un anneau de fixation 8 est fixé, par exemple par soudage sur la surface intérieure de la boîte à eau 2, dans une disposition coaxiale par rapport à l'ouverture de la tubulure 6 dans la zone où la partie évasée de la tubulure 6 débouche à l'intérieur de la boîte à eau 2.

La tubulure 6 est également percée d'un canal 9 permettant de réaliser la vidange complète de la boîte à eau.

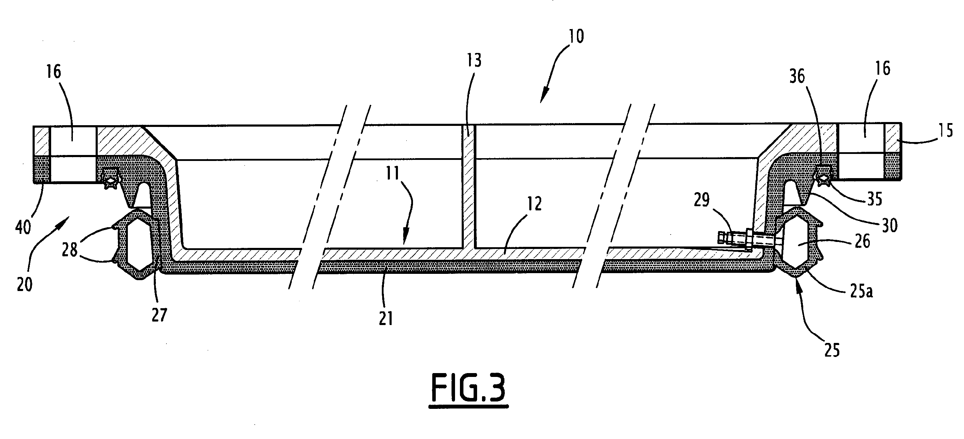

Un obturateur représenté dans son ensemble sur les Figs. 3 à 6 doit être introduit à l'intérieur de la boîte à eau 2 par le trou d'homme 7 débouchant dans ladite boîte à eau.

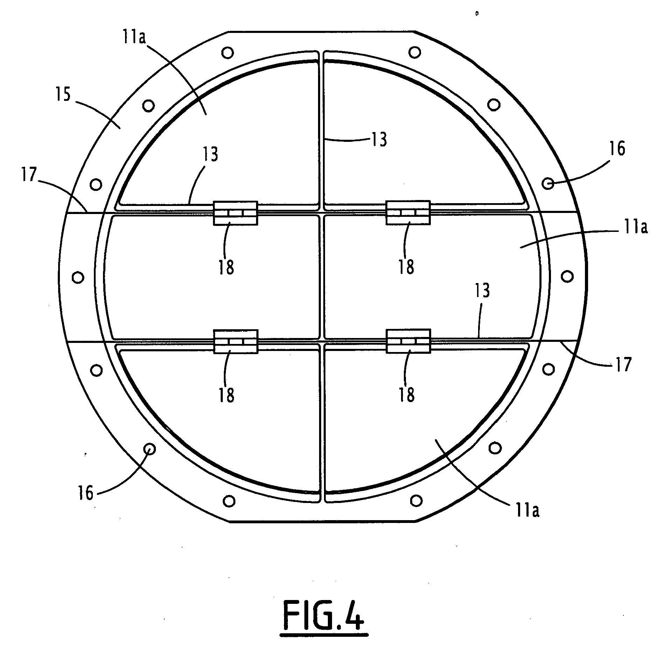

Cet obturateur désigné dans son ensemble par la référence 10 comprend un opercule 11 rigide formé par une partie centrale 12 sensiblement cylindrique et en forme de cuvette (Fig. 3.). Cette partie centrale 12 sous la forme d'une cuvette est renforcée par des nervures 13 (Fig. 4). Le diamètre de la partie centrale 12 est inférieur au diamètre intérieur de l'anneau de fixation 8.

L'opercule 11 comporte également une partie annulaire plate 15 en forme de disque dont le diamètre est supérieur au diamètre intérieur de l'anneau de fixation 8.

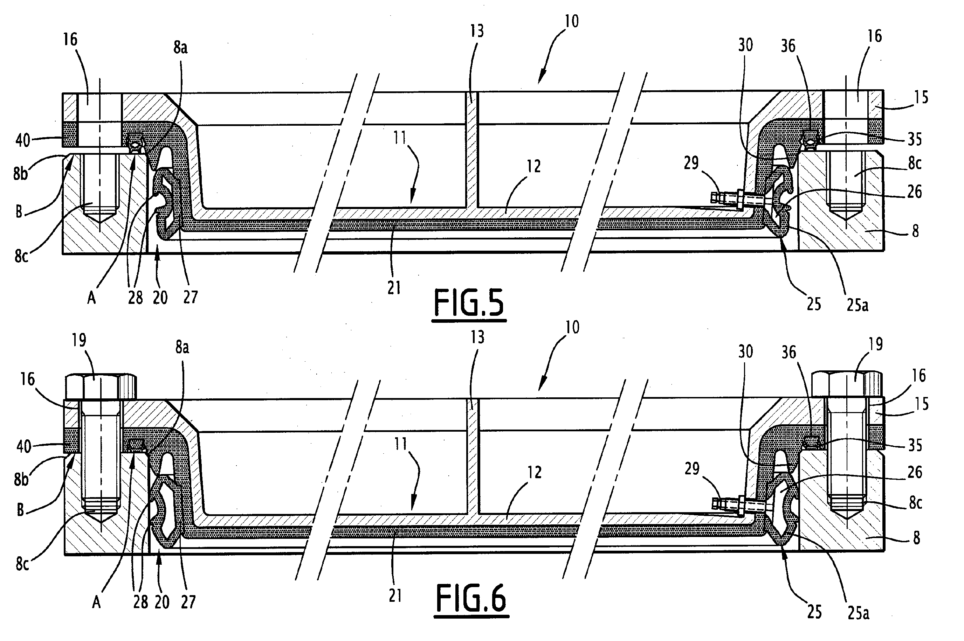

De préférence, le diamètre de la partie annulaire plate 15 est sensiblement égal au diamètre extérieur de cet anneau de fixation 8. Cette partie 15 comporte des orifices 16 pour le passage d'organes de fixation 19 (Fig. 6), comme par exemple des organes de vissage, coopérant avec des orifices taraudés 8c ménagés dans ledit anneau de fixation 8.

L'opercule 11 est en matériau composite ou en alliage métallique, comme par exemple de l'aluminium, assurant une rigidité suffisante pour que cet opercule résiste à la pression de l'eau dans le circuit primaire qui est de l'ordre de quelques bars.

Afin de satisfaire à des contraintes de masse et d'encombrement de passage de l'obturateur 10 dans le trou d'homme 7, l'opercule 11 est donc réalisé en matériau léger et en au moins deux panneaux articulés entre eux et repliables les uns sur les autres.

Dans l'exemple de réalisation représenté sur les figures et plus particulièrement à la Fig. 4, l'opercule 11 est formé de trois panneaux 11 a juxtaposés et séparés les uns des autres par des lignes de pliure 17.

Les panneaux 11 a sont articulés entre eux au moyen de charnières 18, de type connu ou au moyen de tout autre système approprié.

L'obturateur 10 comprend également un ensemble d'étanchéité désigné par la référence générale 20 et porté par ledit opercule 11.

De préférence, l'ensemble d'étanchéité 20 est rendu solidaire de la partie centrale 12 de l'opercule 11.

A cet effet, la face inférieure de cet opercule 11 sert de support à une membrane 21 ayant un rôle dans la fonction d'étanchéité entre le circuit primaire et l'intérieur de la boîte à eau 2. La membrane 21 fait partie de l'ensemble d'étanchéité 20, ainsi qu'on le verra ultérieurement. Elle est fixée sur la face inférieure de l'opercule 11 par tout moyen approprié, comme par exemple par des vis.

Ainsi que représenté plus particulièrement sur les Figs. 3 et 5, l'ensemble d'étanchéité 20 se compose de quatre éléments, à savoir :
- un joint annulaire passif 25,
- un premier joint annulaire statique 30,
- un second joint annulaire statique 35, et
- un joint annulaire plat 40.

Le joint annulaire passif 25 est formé par une enveloppe 25a délimitant au moins une chambre annulaire 26. L'enveloppe 25a comporte sur sa face latérale interne un talon 27 de fixation sur la membrane 21 et sur sa face latérale externe, au moins une lèvre extérieure 28 et, de préférence, deux lèvres extérieures 28 destinées à venir s'appliquer contre la surface interne de l'anneau de fixation 8, ainsi qu'on le verra ultérieurement.

Dans l'exemple de réalisation représenté sur les figures, le joint annulaire passif 25 comporte une chambre annulaire 26 qui est reliée par au moins une valve de raccordement 29 à un système de mise en dépression, non représenté, permettant de changer le diamètre externe de ce joint annulaire passif 25 entre une position rétractée par mise en dépression de la chambre 26 durant la pose de l'opercule 11 sur l'anneau de fixation 8, comme montré à la Fig. 5, et une position déployée d'étanchéité dans laquelle les lèvres 28 sont appliquées contre la surface interne de l'anneau de fixation 8, ainsi que montré à la Fig. 6.

La chambre 26 doit être dépressurisée et donc rétractée pour permettre la pose de l'opercule 11 sur l'anneau de fixation 8.

Après la fixation de cet opercule 11, la mise à la pression atmosphérique de la chambre 26 correspond à la position déployée d'étanchéité du joint 25.

Le premier joint annulaire statique 30 est formé par une lèvre moulée directement avec la membrane 21 et qui est apte à assurer l'étanchéité contre la surface interne ou l'angle interne supérieur de l'anneau de fixation 8 afin de former une barrière à la pression et à la dépression.

Dans l'exemple de réalisation représenté sur les figures, la lèvre du premier joint annulaire 30 présente une section de forme triangulaire dont la base présente un diamètre extérieur supérieur au diamètre intérieur de l'anneau de fixation 8 pour vernir se plaquer contre ladite surface interne après le serrage des organes de vissage 19 de l'opercule 10. La lèvre de ce premier joint annulaire 30 agit comme un bouchon.

Le deuxième joint statique 35 du type à simple effet ou à double effet est monté dans un logement 36 ménagé dans la membrane 21. Ce second joint statique 35 est destiné à venir en appui sur une zone A (Fig. 5) de la surface supérieure de l'anneau de fixation 8, située entre le rebord interne 8a et les orifices taraudés 8c dudit anneau de fixation 8.

Le joint annulaire plat 40 est venu de matière avec la membrane 21 et est destiné à venir en appui sur une zone B (Fig. 5) de la surface supérieure de l'anneau de fixation 8, située entre les orifices taraudés 8c et le rebord externe 8b de l'anneau de fixation 8.

Selon une variante, l'opercule 11 est formé d'au moins deux panneaux indépendants juxtaposés par l'intermédiaire de rebords d'assemblage par exemple. L'un des panneaux porte l'ensemble d'étanchéité 20.

La pose de l'obturateur 10 dans l'ouverture de la tubulure 6 de la boîte à eau 2 est réalisée de la façon suivante.

Tout d'abord, un opérateur pénètre dans le compartiment correspondant de la boîte à eau 2 et il introduit dans ce compartiment l'opercule 11 portant l'ensemble d'étanchéité 20, dans une configuration repliée. Dans cette configuration, l'opercule 11 peut passer dans le trou d'homme 7 qui présente un diamètre intérieur inférieur au diamètre de l'opercule 10 lorsqu'il est déployé.

L'opercule 11 porte les organes de vissage 19 destinés à fixer l'obturateur 10 sur l'anneau de fixation 8.

L'opérateur procède ensuite au dépliage de l'opercule 11 et il relie la valve de raccordement 29 de la chambre 26 du joint passif 25 au système de mise en dépression.

Ainsi, par la mise en dépression de cette chambre 26, le joint passif 25 se rétracte, comme représenté à la Fig. 5 et cette mise en dépression est maintenue afin de garder le joint passif 25 en position rétractée.

Ensuite, l'opérateur pose l'opercule 10 dans l'ouverture de la tubulure 6, le joint passif 25 en position rétractée venant se loger à l'intérieur de l'anneau de fixation 8, comme le montre la Fig. 5.

De même, le premier joint annulaire statique 30 vient en appui contre le rebord interne 8a de l'anneau de fixation 8 et le second joint annulaire statique 35 vient en appui sur la zone A de cet anneau de fixation 8.

L'opérateur procède à la fixation de l'obturateur 10 sur l'anneau de fixation 8 en vissant les organes de vissage 19.

Sous l'effet de la force exercée par ces organes de vissage 19, le premier joint annulaire statique 30 pénètre plus profondément à l'intérieur de l'anneau de fixation 8 et assure une barrière à la pression et à la dépression. Le second joint annulaire statique 35 s'écrase également contre la zone A de l'anneau de fixation 8 et assure un rôle de limiteur des éventuelles fuites venant de la partie à étancher ou de la mise en pression accidentelle au-dessus de l'obturateur 10. Le joint annulaire plat 40 entre en contact avec la zone B de l'anneau de fixation 8 et assure une étanchéité classique par le serrage de l'ensemble des organes de vissage 19.

L'opérateur arrête la mise en dépression de la chambre 26 du joint passif 25 pour déployer ledit joint 25 contre la surface interne de l'anneau de fixation 8 et rendre ainsi étanche l'obturation de l'ouverture de la tubulure.

Dans le cas où l'opercule 11 est constitué d'au moins deux panneaux indépendants, ces panneaux sont introduits séparément dans le compartiment de la boîte à eau 2 par le trou d'homme correspondant, puis assemblés de façon à déployer ledit opercule.

L'obturateur 10 conforme à l'invention permet donc d'assurer un très bon contact d'étanchéité sur i'anneau de fixation et cet obturateur présente une résistance accrue à la pression quel que soit le sens dans lequel s'exerce cette pression.

L'obturateur selon l'invention présente l'avantage d'être résistant et léger facilitant les opérations de manipulation et il est facile à mettre en place ce qui diminue le temps d'intervention de ces opérateurs dans un environnement hostile.

## Revendications

1. Ensemble d'obturation étanche d'une ouverture d'une tubulure (6) de jonction d'une enceinte (2) et d'une canalisation, comportant d'une part un anneau de fixation (8) disposé autour de cette ouverture de raccordement de la tubulure (6) débouchant dans l'enceinte (2) et fixé sur la surface interne de ladite enceinte et d'autre part un obturateur (10), ledit obturateur comprenant :
- un opercule (11) rigide formé par une partie centrale (12) sensiblement cylindrique dont le diamètre est inférieur au diamètre intérieur de l'anneau de fixation (8) et une partie annulaire (15) plate dont le diamètre est supérieur au diamètre intérieur dudit anneau de fixation (8) et munie d'organes de fixation (19) destinés à être vissés dans des orifices taraudés (8c) ménagés sur cet anneau (8), et
- un ensemble d'étanchéité (20) porté par ledit opercule (11),
**caractérisé en ce que** l'ensemble d'étanchéité (20) comprend :
- un joint annulaire passif (25) comportant au moins une chambre annulaire (26) et muni d'au moins une lèvre extérieure (28), ledit joint (25) étant déformable entre une position rétractée par mise en dépression de ladite au moins chambre annulaire (26) durant la pose de l'opercule (11) sur l'anneau de fixation (8) et une position déployée d'étanchéité dans laquelle ladite au moins lèvre (28) est appliquée contre la surface interne de l'anneau de fixation (8),
- un premier joint annulaire (30) statique apte à assurer l'étanchéité contre la surface interne et/ou l'angle interne supérieur de l'anneau de fixation (8),
- un second joint annulaire (35) statique apte à venir en appui sur une zone de la surface supérieure de l'anneau de fixation (8) située entre le rebord interne (8a) et les orifices taraudés (8c) dudit anneau (8), lors du serrage des organes de vissage (19) de l'opercule (11), et
- un joint annulaire (40) plat apte à venir en appui sur une zone de la surface supérieure de l'anneau de fixation (8) située entre les orifices taraudés (8c) et le rebord externe (8b) dudit anneau (8), lors du serrage des organes de vissage (19) de l'opercule (11).

2. Ensemble d'obturaturation selon la revendication 1, **caractérisé en ce que** l'ensemble d'étanchéité (20) est solidaire d'une membrane (21) fixée sur la face inférieure de la partie centrale (12) de l'opercule (11).

3. Ensemble d'obturation selon la revendication 1 ou 2, **caractérisé en ce que** ladite au moins chambre annulaire (26) du joint passif (25) est reliée par au moins une valve de raccordement (29) à un système de mise en dépression.

4. Ensemble d'obturation selon l'une quelconque des revendications 1 à 3, **caractérisé en ce que** le second joint annulaire (35) statique est du type à simple effet ou à double effet.

5. Ensemble d'obturation selon l'une quelconque des revendications 1 à 4, **caractérisé en ce que** l'opercule (11) est en matériau composite ou en alliage métallique, comme par exemple de l'aluminium.

6. Ensemble d'obturation selon l'une quelconque des revendications 1 à 5, **caractérisé en ce que** l'opercule (11) est formé d'au moins deux panneaux (11a) articulés entre eux et repliables les uns sur les autres.

7. Ensemble d'obturation selon l'une quelconque des revendications 1 à 5, **caractérisé en ce que** l'opercule (11) est formé d'au moins deux panneaux indépendants.

8. Procédé d'obturation étanche d'une ouverture d'une tubulure (6) d'une jonction d'une enceinte (2) et d'une canalisation, au moyen d'un ensemble d'obturation selon l'une quelconque des revendications précédentes, **caractérisé en ce qu'**il consiste en les étapes suivantes :
- on introduit à l'intérieur de l'enceinte (2) par un trou d'homme (7), l'opercule (11) portant l'ensemble d'étanchéité (20),
- on relie la valve de raccordement (29) de ladite au moins chambre (26) du joint passif (25) au système de mise en dépression,
- on rétracte le joint passif (25) par mise en dépression de ladite au moins chambre annulaire (26) et on le maintient en position rétractée,
- on positionne et on installe l'obturateur (11) sur l'anneau de fixation (8) en plaçant, d'une part, le premier joint annulaire (30) statique contre la surface interne de l'anneau de fixation (8) et, d'autre part, le second joint annulaire (35) statique et le joint annulaire (40) plat sur la surface supérieure dudit anneau (8),
- on fixe l'obturateur (10) sur l'anneau de fixation par les organes de vissage (19), et
- on arrête la mise en dépression de ladite au moins chambre annulaire (26) du joint passif (25) pour déployer ledit joint (25) contre la surface interne de l'anneau de fixation (8) et rendre étanche l'obturation de l'ouverture de la tubulure (6).

9. Procédé selon la revendication 8, **caractérisé en ce que** l'on introduit dans l'enceinte (2), l'opercule (11) en position repliée et on déploie ledit opercule (11).

10. Procédé selon la revendication 8 se référant à l'ensemble d'obturation selon la revendication 7, **caractérisé en ce que** l'on introduit dans l'enceinte (2), les panneaux indépendants de l'opercule (11) et on déploie ledit opercule (11).

11. Utilisation d'un ensemble d'obturation étanche selon l'une quelconque des revendications 1 à 8 pour l'obturation d'une ouverture d'une tubulure (6) de jonction d'une boîte à eau (2) d'un générateur de vapeur avec une canalisation du circuit primaire d'un réacteur nucléaire à eau sous pression.

## Patentansprüche

1. Abgedichtete Stopfenanordnung für eine Öffnung in einem Verbindungsrohr (6) zum Verbinden eines Gehäuses (2) und einer Rohrleitung, die einerseits einen Befestigungsring (8), der um diese Anschlussöffnung des in das Gehäuse (2) mündenden Rohres (6) herum angeordnet ist und an der Innenfläche des Gehäuses befestigt ist, sowie andererseits ein Verschlussteil (10) aufweist, wobei das Verschlussteil Folgendes aufweist:
- einen starren Deckel (11), der aus einem im Wesentlichen zylindrischen Mittelbereich (12), dessen Durchmesser kleiner ist als der Innendurchmesser des Befestigungsrings (8), und einem flachen Ringbereich (15) gebildet ist, dessen Durchmesser größer ist als der Innendurchmesser des Befestigungsrings (8) und der mit Befestigungsorganen (19) versehen ist, die dazu bestimmt sind, in Gewindebohrungen (8c) eingeschraubt zu werden, die in diesem Ring (8) eingearbeitet sind, und
- eine Dichtungseinheit (20), die von dem Deckel (11) getragen wird,
**dadurch gekennzeichnet,**
**dass** die Dichtungseinheit (20) Folgendes aufweist:
- eine passive Ringdichtung (25), die mindestens eine ringförmige Kammer (26) aufweist und mit mindestens einer Außenlippe (28) versehen ist, wobei die Dichtung (25) verformbar ist zwischen einer zusammengezogenen Stellung durch das Aufbringen eines Unterdrucks auf die mindestens eine ringförmige Kammer (26) während des Aufsetzens des Deckels (11) auf den Befestigungsring (8) und einer ausgedehnten Abdichtungsstellung, in welcher die mindestens eine Lippe (28) gegen die Innenfläche des Befestigungsrings (8) angedrückt wird,
- eine erste statische Ringdichtung (30), die dazu ausgelegt ist, die Dichtheit an der Innenfläche und/oder dem oberen Innenwinkel des Befestigungsrings (8) sicherzustellen,
- eine zweite statische Ringdichtung (35), die dazu ausgelegt ist, in Anlage gegen einen Bereich der oberen Fläche des Befestigungsrings (8) zu gelangen, der sich zwischen dem Innenrand (8a) der Gewindebohrungen (8c) des Rings (8) befindet, wenn die Schrauborgane (19) des Deckels (11) angezogen werden, und
- eine flache Ringdichtung (40), die dazu ausgelegt ist, in Anlage gegen einen Bereich der oberen Fläche des Befestigungsrings (8) zu gelangen, der sich zwischen den Gewindebohrungen (8c) und dem Außenrand (8b) des Rings (8) befindet, wenn die Schrauborgane (19) des Deckels (11) angezogen werden.

2. Stopfenanordnung nach Anspruch 1,
**dadurch gekennzeichnet,**
**dass** die Dichtungseinheit (20) einstückig mit einer Membran (21) verbunden ist, die an der Unterseite des Mittelbereichs (12) des Deckels (11) befestigt ist.

3. Stopfenanordnung nach Anspruch 1 oder 2,
**dadurch gekennzeichnet,**
**dass** die mindestens eine Ringkammer (26) der passiven Dichtung (25) über mindestens ein Anschlussventil (29) mit einem System zum Aufbringen von Unterdruck verbunden ist.

4. Stopfenanordnung nach einem der Ansprüche 1 bis 3,
**dadurch gekennzeichnet,**
**dass** die zweite statische Ringdichtung (35) vom Typ mit Einfachwirkung oder Doppelwirkung ist.

5. Stopfenanordnung nach einem der Ansprüche 1 bis 4,
**dadurch gekennzeichnet,**
**dass** der Deckel (11) aus einem Verbundmaterial oder aus einer Metall-Legierung, beispielsweise aus Aluminium, besteht.

6. Stopfenanordnung nach einem der Ansprüche 1 bis 5,
**dadurch gekennzeichnet,**
**dass** der Deckel (11) aus mindestens zwei Platten (11a) besteht, die aneinander angelenkt und gegeneinander umklappbar sind.

7. Stopfenanordnung nach einem der Ansprüche 1 bis 5,
**dadurch gekennzeichnet,**
**dass** der Deckel (11) aus mindestens zwei unabhängigen Platten gebildet ist.

8. Verfahren zum dichten Verschließen einer Öffnung in einem Verbindungsrohr (6) zum Verbinden eines Gehäuses (2) und einer Rohrleitung mittels einer Stopfenanordnung nach einem der vorangehenden Ansprüche,
**dadurch gekennzeichnet,**
**dass** es die nachfolgenden Schritte aufweist:
- Einführen des die Dichtungseinheit (20) tragenden Deckels (11) in das Gehäuse (2) durch ein Mannloch (7),
- Verbinden des Anschlussventils (29) der mindestens einen Kammer (26) der passiven Dichtung (25) mit dem System zum Aufbringen von Unterdruck,
- Zusammenziehen der passiven Dichtung (25) durch Aufbringen von Unterdruck auf die mindestens eine Ringkammer (26) und Halten derselben in der zusammengezogenen Stellung,
- Positionieren und Montieren des Deckels (11) an dem Befestigungsring (8) durch Ansetzen der ersten statischen Ringdichtung (30) an die Innenfläche des Befestigungsrings (8) einerseits und der zweiten statischen Ringdichtung (35) und der flachen Ringdichtung (40) an die obere Fläche des Rings (8) andererseits,
- Befestigen des Verschlussteils (10) an dem Befestigungsring mittels der Schrauborgane (19), und
- Abbrechen der Ausübung des Unterdrucks auf die mindestens eine Ringkammer (26) der passiven Dichtung (25) zum Ausdehnen der Dichtung (25) gegen die Innenfläche des Befestigungsrings (8) und Abdichten des Verschlusses des Öffnung des Rohrs (6).

9. Verfahren nach Anspruch 8,
**dadurch gekennzeichnet,**
**dass** der Deckel (11) in zusammengezogener Stellung in das Gehäuse (2) eingeführt wird und der Deckel (11) ausgedehnt wird.

10. Verfahren nach Anspruch 8 unter Bezugnahme auf die Stopfenanordnung nach Anspruch 7,
**dadurch gekennzeichnet,**
**dass** die unabhängigen Platten des Deckels (11) in das Gehäuse (2) eingeführt werden und der Deckel (11) ausgedehnt wird.

11. Verwendung einer abgedichteten Stopfenanordnung nach einem der Ansprüche 1 bis 8 zum Verschließen einer Öffnung in einem Verbindungsrohr (6) zum Verbinden eines Wasserkastens (2) eines Dampferzeugers mit einer Rohrleitung des Primärkreislaufs eines Druckwasser-Atomreaktors.

## Claims

1. A sealed stopper assembly for an opening in a junction tubing (6) between an enclosure (2) and a pipe, including on the one hand an attachment ring (8), positioned around this the opening for connecting the tubing (6) opening out into the enclosure (2) and attached onto the internal surface of said enclosure and on the other hand a stopper (10), said stopper comprising:
- a rigid lid (11) formed by a substantially cylindrical central portion (12), the diameter of which is smaller than the inner diameter of the attachment ring (8) and a flat annular portion (15), the diameter of which is greater than the inner diameter of said attachment ring (8) and provided with the attachment members (19) intended to be screwed into threaded orifices (8c) made on this ring (8), and
- a sealing assembly (20) borne by said lid (11),
**characterized in that** the sealing assembly (20) comprises:
- a passive annular gasket (25) including at least one annular chamber (26) and provided with at least one outer lip (28), said gasket (25) being deformable between a retracted position by depressurization of said at least one annular chamber (26) during the laying of the lid (11) on the attachment ring (8) and a deployed sealing position in which said at least one lip (28) is applied against the internal surface of the attachment ring (8),
- a first static annular gasket (30) capable of ensuring the seal between the internal surface and/or the upper internal angle of the attachment ring (8),
- a second static annular gasket (35) capable of bearing upon an area of the upper surface of the attachment ring (8) located between the internal rim (8a) and the threaded orifices (8c) of said ring (8), during the tightening of the screwing members (19) of the lid (11), and
- a flat annular gasket (40) capable of bearing upon an area of the upper surface of the attachment ring (8) located between the threaded orifices (8c) and the external rim (8b) of said ring (8), during the tightening of the screwing members (19) of the lid (11).

2. The stopper assembly according to claim 1, **characterized in that** the sealing assembly (20) is firmly secured to a membrane (21) fixed on the lower face of the central portion (12) of the lid (11).

3. The stopper assembly according to claim 1 or 2, **characterized in that** said at least one annular chamber (26) of the passive gasket (25) is connected through at least one connecting valve (29) to a depressurization system.

4. The stopper assembly according to any of claims 1 to 3, **characterized in that** the second static annular gasket (35) is of the single effect or dual effect type.

5. The stopper assembly according to any of claims 1 to 4, **characterized in that** the lid (11) is in composite material or in a metal alloy, such as aluminium for example.

6. The stopper assembly according to any of claims 1 to 5, **characterized in that** the lid (11) is formed with at least two panels (11a) hinged together and foldable on each other.

7. The stopper assembly according to any of claims 1 to 5, **characterized in that** the lid (11) is formed with at least two independent panels.

8. A method for sealing an opening of a junction tubing (6) between an enclosure (2) and a pipe, by means of a stopper assembly according to any of the preceding claims, **characterized in that** it consists in the following steps:
- the lid (11) bearing the sealing assembly (20) is introduced into the inside of the enclosure (2) through a manhole (7),
- the connecting valve (29) of said at least one chamber (26) of the passive gasket (25) is connected to the depressurization system,
- the passive gasket (25) is retracted by depressurizing said at least one annular chamber (26) and is maintained in the retracted position,
- the stopper (11) is positioned and installed on the attachment ring (8) by placing the first static annular gasket (30) against the internal surface of the attachment ring (8) on the one hand and the second static annular gasket (35) and the flat annular gasket (40) on the upper surface of said ring (8) on the other hand,
- the stopper (10) is attached onto the attachment ring with the screwing members (19), and
- the depressurization of said at least one annular chamber (26) of the passive gasket (25) is stopped for deploying said gasket (25) against the internal surface of the attachment ring (8) and for hermetically sealing the opening of the tubing (6).

9. The method according to claim 8, **characterized in that** the lid (11) in the folded position is introduced into the enclosure (2), and said lid (11) is deployed.

10. The method according to claim 8 refering to the stopper assembly of claim 7, **characterized in that** the independent panels of the lid (11) are introduced into the enclosure (2), and said lid (11) is deployed.

11. The use of a sealed stopper assembly according to any of claims 1 to 8, for sealing an opening of a junction tubing (6) between a water box (2) of a steam generator and a pipe of the primary circuit of a pressurized water nuclear reactor.
